(19)

Europäisches
Patentamt

European
Patent Office

Office européen
des brevets

(11) EP 2 805 401 B1

(12) **EUROPEAN PATENT SPECIFICATION**

(45) Date of publication and mention
of the grant of the patent:
**30.12.2015 Bulletin 2015/53**

(21) Application number: **12701847.1**

(22) Date of filing: **16.01.2012**

(51) Int Cl.:
*H02J 7/04* *(2006.01)*       *H02J 7/00* *(2006.01)*

(86) International application number:
**PCT/EP2012/050563**

(87) International publication number:
**WO 2013/107497 (25.07.2013 Gazette 2013/30)**

(54) **ADJUSTMENT OF A CAPACITOR CHARGE VOLTAGE**

EINSTELLUNG DER LADESPANNUNG EINES KONDENSATORS

RÉGLAGE DE LA TENSION DE CHARGE D'UN CONDENSATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.11.2014 Bulletin 2014/48**

(73) Proprietor: **Schneider Electric Buildings LLC
North Andover, MA 02845 (US)**

(72) Inventor: **GÖTH, Fredrik
212 17 Malmö (SE)**

(74) Representative: **Åberg, Sofia Gertrud et al
Awapatent AB
P.O. Box 5117
200 71 Malmö (SE)**

(56) References cited:
**JP-A- 2005 117 792     JP-A- 2008 017 691**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical field

The present invention generally relates to the field of charging of capacitors in systems having a charging part and a discharging part. In particular, it relates to a method and arrangements for adjusting the charge voltage of a capacitor in such systems.

Background

Electrochemical double layer capacitors (EDLCs), also known as ultra capacitors or super capacitors, are often used as energy storage devices in electronic circuits. For example EDLCs may be used as a power back-up in a system.
A problem with EDLCs is that they have a limited lifetime in that the capacitance and conductance decrease due to electrochemical reactions. The limited lifetime of the EDLCs is particularly problematic when the EDLCs are used in applications with requirements on long product lifetimes. The aging of the EDLCs is influenced by temperature and voltage. Increasing the voltage and temperature will exponentially accelerate the electrochemical reactions and thus leading to a decrease in capacitance and conductance. The lifetime of an EDLC may be defined as the time until capacitance has decreased to 50% of its initial value and the resistance has increased to 300% of its initial value.
One approach to compensate for the aging of the EDLCs has been to use a capacitor having a high initial capacitance. This approach is disadvantageous in that, initially, more energy is stored in the capacitor than needed. This approach is further disadvantageous in that large capacitors are expensive and that charging of large capacitors to a high voltage level requires a larger and more expensive power supply circuit. Further, the charging of a large capacitor is time consuming.
JP2005117792A discloses an approach to extend the lifetime of EDLCs. More specifically, it discloses an apparatus for controlling a power which can increase the lifetime of an EDLC bank. A temperature sensor detects the element temperature. In response thereto, the apparatus for controlling power drives a cooling fan so that the internal element temperature becomes 50 °C or lower.
The solution of cooling the EDLCs to extend the lifetime as disclosed in JP2005117792 is disadvantageous in that it requires a bulky fan. As a result, it may not be used in applications where the space is limited. Further, fans may not be used in harsh and dusty environments. Thus there is a need for other approaches to extend the lifetime of an EDLC.

Summary of the invention

In view of the above, it is thus an object of the present invention to provide a method and arrangements for extending the lifetime of a capacitor which is used as a power back-up in a system.
According to a first aspect of the invention, the above object is achieved by a method for adjusting a charge voltage of a capacitor in a system having a charging part associated with the charge voltage and a discharging part having a required energy level $W_{need}$, the charge voltage being related to an energy level $W_{stored}$ stored in said capacitor, comprising: receiving a capacitance value of the capacitor; receiving a value of the required energy level $W_{need}$; and adjusting the charge voltage of the capacitor based on said capacitance value and said value of the required energy level $W_{need}$ such that the energy level $W_{stored}$ stored in said capacitor is kept essentially constant.
The energy stored in a capacitor $W_{stored}$ is proportional to the capacitance value and to the square of the voltage across the capacitor. Due to aging, the capacitance value decreases over time. Accordingly, if the charge voltage is kept constant, the energy stored in the capacitor $W_{stored}$ decreases over time, and after a while the energy $W_{stored}$ stored in the capacitor will be lower than the required energy level $W_{need}$. With the method of the invention, however, the charge voltage is adjusted to compensate for the aging of the capacitor. The charge voltage is adjusted such that the energy level $W_{stored}$ stored in the capacitor is kept essentially constant. Thus, as the capacitance decreases due to aging of the capacitor, the charge voltage will be increased and the energy level $W_{storea}$ stored in the capacitor may be kept above the required energy level $W_{need}$. The lifetime of the capacitor is thereby increased. Moreover, since the charge voltage at any time may be chosen to be as low as possible while still keeping the energy level stored in the capacitor at a level which exceeds the required energy level $W_{need}$ the aging of the capacitor is slowed down. Further, the time taken to charge the capacitor is in this way reduced.
The energy level $W_{stored}$ stored in the capacitor is preferably larger than or equal to the required energy level $W_{need}$.
The capacitor may be an Electrochemical Double Layer Capacitor, EDLC.
The method may further comprise receiving a conductance value of the capacitor, said conductance value being related to an ohmic voltage drop, and wherein said adjusting the charge voltage of the capacitor is further based on said conductance value to compensate for said ohmic voltage drop. This is particularly advantageous for applications requiring a long lifetime of the capacitor since the conductance decreases with time and the ohmic voltage drop thereby increases with time. By ohmic voltage drop is meant a drop in voltage caused by a voltage being generated across a resistive component in the capacitor when a current starts to flow from the capacitor to the discharging part of the system

The method may further comprise iterating the steps of receiving a capacitance value of the capacitor, and adjusting the charge voltage of the capacitor based on the capacitance value and the value of the required energy level $W_{need}$ until the energy level $W_{stored}$ stored in the capacitor is essentially equal to the required energy level $W_{need}$. This is advantageous in that a non-linear dependence of the capacitance on the charge voltage may be taken into account.

The acts of receiving a capacitance value, receiving a value of the required energy level $W_{need}$, and adjusting the charge voltage may be performed in cycles. For example, the adjustment of the charge voltage may be performed once a day or once every second. This is advantageous in that the charge voltage may be adjusted periodically to ensure that the energy level stored in the capacitor is kept essentially constant.

The method may further comprise receiving a temperature value of an ambient temperature, and determining a period of the cycles based on the temperature value. The temperature influences the aging of the capacitor. Thus, for high temperatures, the capacitance decreases rapidly and the adjustment is advantageously carried out more often than for low temperatures.

The method may further comprise determining the capacitance value of the capacitor. In one embodiment, the act of determining the capacitance value of the capacitor may comprise: performing one of charging or discharging of the capacitor by providing a charging current to the capacitor, or connecting a load in parallel with the capacitor, such that thereby a discharging current is caused to flow from the capacitor, wherein the charging or discharging is initiated at a first time point; measuring a charge change of the capacitor during a time period when the capacitor is charged or discharged, wherein the time period occurs after the first time point; measuring a first voltage change across the capacitor during the same time period; and determining the capacitance value as a ratio between the measured charge change and the measured first voltage change. This is advantageous in that it enables an accurate capacitance value of the capacitance to be obtained by performing direct measurements on the capacitor.

In case the charging current or the discharging current has a known current value at the first time point, the method may further comprise: measuring a second voltage change occurring at the first time point, the second voltage change being related to a voltage across a resistive component in the capacitor caused by the charging current or the discharging current; and determining a conductance value of the capacitor as the ratio between the known current value and the measured second voltage change. This is advantageous in that also the conductance value may be obtained by direct measurements so that the ohmic voltage drop may be taken into account when adjusting the charge voltage.

The charging current or the discharging current may correspond to a constant current value, and the act of determining the capacitance value as a ratio may comprise determining a gradient of a measured voltage across the capacitor during charging or discharging of the capacitor. This is advantageous in that the determination of the capacitance value simplifies to determining a gradient of a measured voltage across the capacitor.

In one embodiment, the act of receiving a capacitance value of the capacitor comprises receiving information pertaining to variation of the capacitance value as a function of time and/or temperature from a curve or a table; and determining the capacitance value of the capacitor as the capacitance value of the curve or table that corresponds to a current time and/or temperature. This is advantageous in that the capacitance value may be determined in a simple way using a low amount of processing power.

According to a second aspect of the invention, the object is achieved by a control unit for adjusting a charge voltage of a capacitor in a system having a charging part associated with the charge voltage and a discharging part having a required energy level $W_{need}$, the charge voltage being related to an energy level $W_{stored}$ stored in said capacitor. The control unit comprises a receiver arranged to receive a capacitance value of the capacitor; and a value of the required energy level $W_{need}$; a processing unit arranged to adjust the charge voltage of the capacitor based on said capacitance value and said value of the energy level $W_{need}$ such that the energy level $W_{stored}$ stored in said capacitor is kept essentially constant; and a transmitter arranged to transmit a signal relating to the adjusted charge voltage.

According to a third aspect of the invention, the object is achieved by an arrangement for adjusting a charge voltage of a capacitor in a system having a charging part associated with the charge voltage and a discharging part having a required energy level $W_{need}$, the charge voltage being related to an energy level $W_{stored}$ stored in said capacitor. The arrangement comprises a control unit according to the second aspect, and an adjustable voltage regulator which is arranged to receive the signal relating to the adjusted charge voltage from the control unit, and to apply a voltage level across the capacitor corresponding to the adjusted charge voltage.

According to a fourth aspect of the invention, the object is achieved by a computer program product stored on a non-volatile computer-readable medium comprising computer program code portions adapted to perform the method according to the first method when loaded and executed on a computer.

The second, third and fourth aspects may generally have the same features and advantages as the first aspect. It is further noted that the invention relates to all possible combinations of features unless explicitly stated otherwise.

Generally, all terms used in the claims are to be interpreted according to their ordinary meaning in the technical field, unless explicitly defined otherwise herein. All references to "a/an/the [device, event, message, alarm, parameter, step etc.]" are to be interpreted openly as referring to at least one instance of said device, event, message, alarm, parameter, step etc., unless explicitly stated otherwise. The steps of any method disclosed herein do not have to be performed in the exact order disclosed, unless explicitly stated.

Brief Description of the Drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:

Fig. 1 is a schematic illustration of a system in which embodiments of the present invention may be used,
Fig. 2 is a schematic illustration of internal components of a control unit according to embodiments,
Figs 3-4 are schematic illustrations of arrangements for determining a capacitance value according to embodiments.
Figs 5a-b are schematic graphs illustrating the capacitor voltage as a function of time during charging and discharging, respectively.
Figs 6-7 are flow charts of methods according to embodiments.

Detailed description of embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

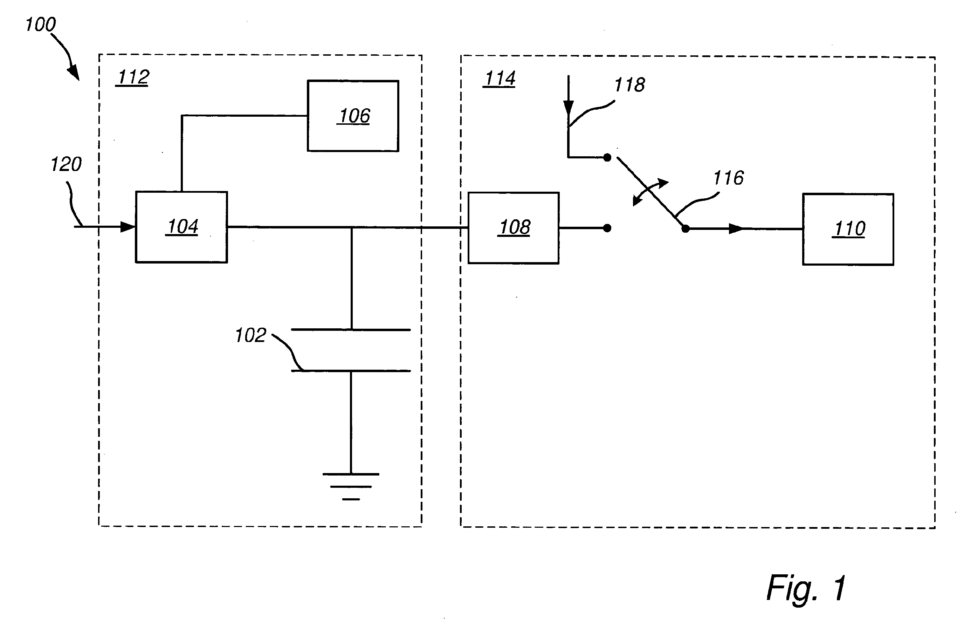

Fig. 1 illustrates a system 100 comprising a load 110 and a capacitor 102. The system 100 may be used as a back-up system for powering the load 110. Particularly, the capacitor 102 may be used as a back-up power source for the load 110. Normally, the load 110 is powered via a power net 118. However, if there is a power fail, the load may be connected to the backupsystem comprising the capacitor 102, for example by means of a switch 116.

The system 100 has a charging part 112 and a discharging part 114. The discharging part 114 is associated with a discharging mode of the capacitor 102. Particularly, in the discharging mode, the capacitor 102 is connected to the load 110 to power the load 110. The capacitor 102 may be connected to the load 110 via a voltage regulator 108.

The charging part 112 is associated with a charging mode of the capacitor 102. In the charging mode, the capacitor 102 is disconnected from the load 110. When in the charging mode, the capacitor 102 is charged by means of a charging voltage which is applied across the capacitor 102. The charging voltage is provided by an adjustable voltage regulator 104. The adjustable voltage regulator 104 is powered by a power net 120.

Further, the adjustable voltage regulator 104 is connected to a control unit 106. The control unit 106 is arranged to determine an adjusted charge voltage and to send a signal relating to the adjusted charge voltage to the adjustable voltage regulator 104.

The capacitor 102 may be an EDLC. The capacitor 102 has a capacitance value C. The capacitor 102 may store an energy level $W_{stored}$ which is related to the capacitance C and the voltage $V_C$ across the capacitor 102 according to the formula

$$W_{stored} = \frac{1}{2} C \cdot V_C^2.$$

The load 110 is associated with a required energy level $W_{need}$. The required energy level $W_{need}$ is the energy which is needed to back-up the load 110 during a predetermined time period $T_1$. More specifically, the required energy level $W_{need}$ is a product of the time $T_1$ and a constant power P required to drive the load 110. Thus, preferably, the energy $W_{stored}$ stored in the capacitor 102 is larger than or equal to the required energy level $W_{need}$ which is needed to back-up the load 110.

The capacitor 102 is further associated with a conductance G. More precisely, the capacitor 102 has an equivalent representation which comprises a capacitive part and a resistive part, the conductance G being the inverse of an equivalent series resistance (ESR) of the resistive part of the capacitor 102. The equivalent series resistance is due to imperfections within the material of the capacitor 102. The ESR is related to an ohmic voltage drop $V_{ESR}$ of the capacitor. More precisely, as a current is flowing from the capacitor 102, there will according to Ohm's law be a voltage $V_{ESR}$ across the capacitor being equal to the product of the equivalent series resistance and the current flowing from the capacitor 102. As a result of the ohmic voltage drop $V_{ESR}$ of the capacitor 102, all of the energy stored in the capacitor $W_{stored}$ may not be discharged to the load 110 when the capacitor is in discharging mode since there will be power losses in the resitive component in the capacitor. More precisely, the energy $W_{useable}$ which may be used to power the load 110 is given by

$$W_{useable} = W_{stored} - W_{ESR},$$

where $W_{ESR}$ denotes the energy losses in the ESR of the capacitor 102. Due to aging of the capacitor 102, the capacitance C as well as the conductance decreases over time. Mainly two factors influence the aging of the capacitor 102, namely temperature and voltage. Increasing the voltage $V_C$ and temperature will exponentially accelerate electrochemical reaction and thus lead to a decrease in conductance and capacitance. Accordingly, the stored energy $W_{stored}$ or the useable energy $W_{useable}$ decrease with time for a constant charge voltage.

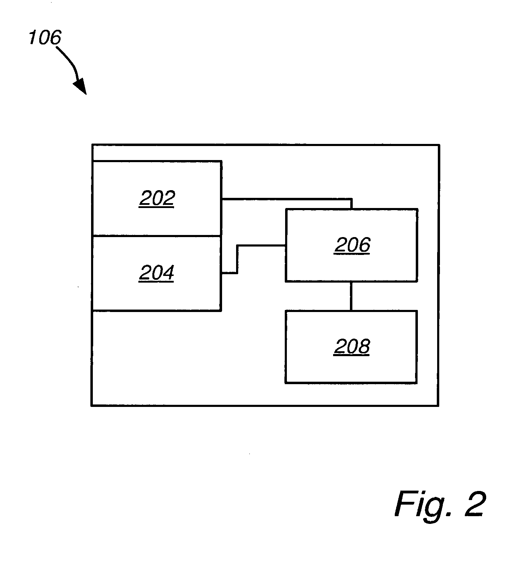

Fig. 2 shows internal components of the control unit 106. The control unit 106 comprises a receiver 202, a transmitter 204, a processing unit 206 and a memory 208. The receiver 202 may for example be arranged to receive a capacitance value C of the capacitor 102 and a required energy level $W_{need}$. The transmitter 204 may, for example, be arranged to transmit a signal pertaining to an adjusted charge voltage to the adjustable voltage regulator 104. The processing unit 206 which may be a central processing unit is arranged to adjust a charge voltage of the capacitor 102 according to embodiments of the present invention. In particular, the memory 208 may store computer-readable instructions which, when loaded and read by the processing unit 106, causes the processing unit 106 to carry out a method according to embodiments of the invention.

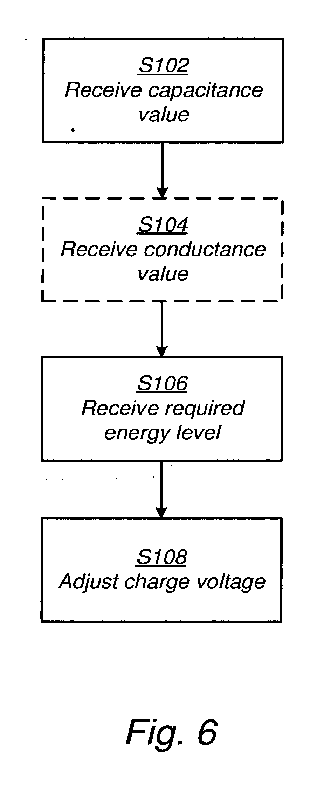

A method for adjusting a charge voltage of the capacitor 102 will now be described with respect to Fig. 6, Fig. 1 and Fig. 2.

In step S102 a capacitance value C of the capacitor 102 is received. The capacitance value C may be received by the receiver 202 of the control unit 106. The capacitance value C may be determined based on measurements made on the capacitor 102 as is further described below. Alternatively, the capacitance value C may be received from a database. If so, the capacitance value may be determined based on information pertaining to the variation of the capacitance value C as a function of time and/or temperature.

In step S106, a value of the required energy level $W_{need}$ is received. The required energy level $W_{need}$ may be received by the receiver 202. The required energy level $W_{need}$ may for example be received from a database or from a user input.

In step S108 the charge voltage $V_C$ of the capacitor 102 is adjusted. An appropriate charge voltage $V_C$ may for example be determined by the processing unit 206 of the control unit 106. Further, a signal relating to the determined charge voltage $V_C$ may be sent to the adjustable voltage regulator 104, via transmitter 204 of the control unit 106. The adjustable voltage regulator 104 may apply a voltage level across the capacitor 102 corresponding to the adjusted charge voltage. The charge voltage $V_C$ is adjusted based on the capacitance value C received in step S102 and the value of the required energy level $W_{need}$ received in step S106.

The charge voltage $V_C$ is adjusted such that the energy level $W_{need}$ is kept essentially constant. More specifically, the charge voltage $V_C$ may be determined by solving the inequality

$$W_{stored} \geq W_{need} \Leftrightarrow \frac{1}{2}C \cdot V_C^2 \geq W_{need} \Leftrightarrow V_C^2 \geq \frac{2W_{need}}{C} \Rightarrow V_C \geq \sqrt{\frac{2W_{need}}{C}},$$

where it has been assumed that $V_C$ is positive. In order to extend the lifetime of the capacitor 102 it is desired to keep the charging voltage as low as possible since the aging of the capacitor is accelerated by a high charge voltage. Thus, the charge voltage $V_C$ is preferably adjusted according to

$$V_C = \sqrt{\frac{2W_{need}}{C}}.$$

In order to compensate for power losses in the ESR of the capacitor 102, i.e., to compensate for the ohmic voltage drop $V_{ESR}$ which is due to the equivalent series resistance of the capacitor 102, the method may further comprise a step S104 of receiving a conductance value G of the capacitor 102. The step S108 of adjusting the charge voltage $V_C$ may further comprise adjusting the charge voltage based on the conductance value G. This is particularly useful for long lifetimes of the capacitor 102 since the conductance G decreases upon aging of the capacitor 102. The charge voltage $V_C$ may for example be adjusted according to the solution of the inequality

$$W_{useable} = W_{stored} - W_{ESR} \geq W_{need}.$$

Preferably, the charge voltage $V_C$ is determined as the solution to the equation

$$W_{stored} - W_{ESR} = W_{need}.$$

In the above equation, $W_{need}$ is a known constant, and $W_{stored}$ is a function of the charge voltage $V_C$. The charge voltage $V_C$ may also be thought of as the initial voltage across the capacitor 102 prior to discharging. The energy losses $W_{ESR}$ in the capacitor 102 depends on the discharge current, i(t) say, which flows from the capacitor 102 during discharging. The discharge current i(t) is a function of time since, as the voltage across the capacitor 102 decreases during discharging, the discharge current i(t) increases such that a power P provided to the load 110 is kept constant. The energy losses $W_{ESR}$ may be expressed as

$$W_{ESR} = \int_0^{T_1} \frac{i^2(t)}{G} dt.$$

The discharge current i(t) may be calculated under the assumption that the power P provided to the load 110 is kept constant by solving the system of equations:

$$\begin{cases} i(t)\left(v(t) - \dfrac{i(t)}{G}\right) = P \\ i(t) = -C\dfrac{d}{dt}v(t) \end{cases},$$

where v(t) is the voltage across the capacitive part of the equivalent representation of the capacitor 102 during discharging, and $v(0)=V_C$. The above system of equations may for example be solved numerically.

In the above, it is has been assumed that the capacitance value C does not depend on the charge voltage. However, the inventor has realized that the capacitance value C in fact is an increasing, non-linear, function of the charge voltage. As an effect, the adjusted charge voltage $V_C$ may result in the energy $W_{stored}$ stored in the capacitor 102 being larger than $W_{need}$ although the energy $V_C$ was adjusted by equating $W_{stored}=W_{need}$ according to the above. In order to take the dependency of the capacitance C on the charge voltage $V_C$ into account, the adjusted charge voltage may be determined by solving the equation

$$\frac{1}{2}C(V_C) \cdot V_C^2 = W_{need},$$

where $C(V_C)$ denotes the capacitance as a function of charge voltage $V_C$. This is a highly non-linear equation which may be solved by an iterative algorithm. The method may thus further comprise iterating the steps of receiving a capacitance value C of the capacitor, and adjusting the charge voltage $V_C$ based on the capacitance value C and the value of the require energy level $W_{need}$. More specifically, a start capacitance $C_0$ may be received and a start value $V_{C,0}$ of the charge voltage may be determined according to

$$V_{C,0} = \sqrt{\frac{2W_{need}}{C_0}}.$$

The charge voltage may then be adjusted to the start value $V_{C,0}$. As the charge voltage is adjusted, the capacitance value C increases to $C_1 = C(V_{C,0}) > C_0$ since the capacitance value is an increasing function of the charge voltage. The method may therefore comprise receiving the new capacitance value $C_1$. Based on the newly received capacitance value $C_1$ an adjusted charge voltage $V_{C,1}$ may be determined according to

$$V_{C,1} = \sqrt{\frac{2W_{need}}{C_1}} = \sqrt{\frac{2W_{need}}{C(V_{C,0})}}.$$

The above steps of receiving capacitance values may be iterated such that the charge voltage $V_{C,i}$ determined in the i:th iteration is given by

$$V_{C,i} = \sqrt{\frac{2W_{need}}{C_i}} = \sqrt{\frac{2W_{need}}{C(V_{C,i-1})}},$$

where $C_i$ is the capacitance received during the i:th iteration. The iteration may be continued until the energy level $W_{stored}$ stored in the capacitor is essentially equal to the required energy level $W_{need}$. The iteration may be terminated when a predetermined criteria is met. For example the iteration may be continued until

$$|W_{stored} - W_{need}| = \left|\frac{1}{2}C_{i+1}V_{C,i}^2 - W_{need}\right| < \varepsilon,$$

for some predetermined tolerance value $\varepsilon > 0$. The above iterative algorithm may be carried out by the control unit 106.

The above iterative approach also applies *mutatis mutandis* to the case where the equivalent series resistance ESR is taken into account.

The adjusting of the charge voltage may be performed in cycles. More specifically, the steps S102, S106, S108 and S104, where applicable, may be carried out periodically, such as once every day. The cycles may have a predetermined period. In one embodiment the period of the cycles is between about 1 second and about 24 hours.

Since the aging of the capacitors depends on the temperature the period of the cycles may be determined based on the temperature. More precisely, the control unit 106 may receive, for example via the receiver 202, a temperature value of ambient temperature. The control unit 106 may then determine a period of the cycles based on the received temperature value. The determination may be carried out by the processing unit 206.

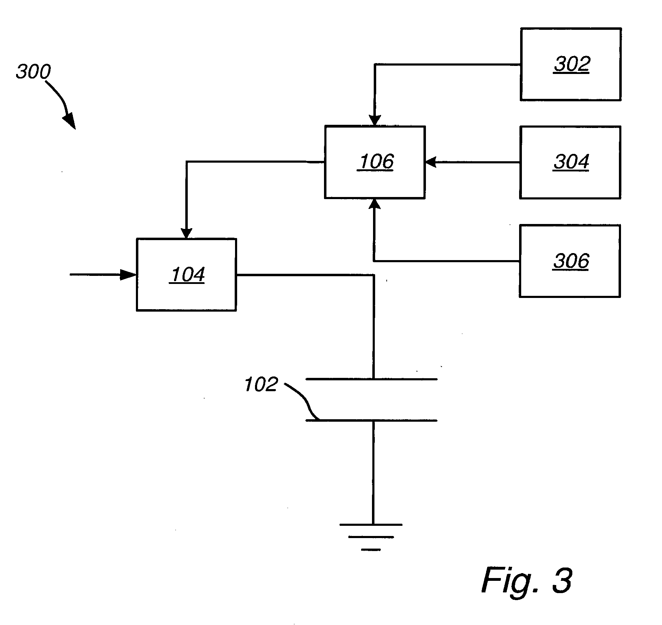

The method may further comprise determining the capacitance value C of the capacitor 102. Fig. 3 illustrates an arrangement 300 which may be used to determine the capacitance value C. The arrangement 300 comprises a capacitor 102 which is connected to a power net via an adjustable voltage regulator 104. A control unit 106 is connected to the adjustable voltage regulator 104 and is arranged to transmit a signal relating to an adjusted charge voltage to the adjustable voltage regulator 104.

The control unit 106 is further wired or wirelessly connected to a database 302. The database 302 may comprise information pertaining to variation of the capacitance value C as a function of time and/or temperature. In particular, the information may pertain to the decrease of the capacitance value C due to aging. For example, the information may be stored in a table or in the form of a graph or curve. The information may be based on calibration experiments which previously have been performed on capacitors. In this way, the control unit 106 is arranged to receive information pertaining to variation of the capacitance value C as a function of time and/or temperature from a curve or a table.

The control unit 106 may further be connected to a time measuring means 306 and a temperature gauge 304. The time measuring means 306 may for example provide the control unit 106 with a current time and the temperature gauge 304 may provide the control unit 106 with a current temperature. Based on the current time and/or temperature and on the received information from the database 302, the control unit 108 may determine the capacitance value C of the capacitor 102 as the capacitance value of the curve or table that corresponds to a current time and/or temperature.

The arrangement of Fig. 3 may *mutatis mutandis* be used to determine a conductance value G of the capacitor.

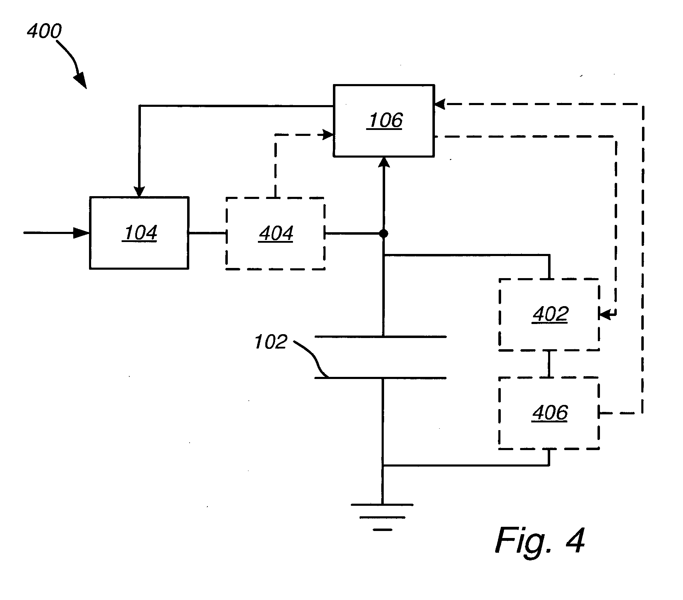

Fig. 4 shows an alternative arrangement 400 which may be used to determine the capacitance value C of the capacitor 102. The arrangement comprises a capacitor 102 which is connected to a power net via an adjustable voltage regulator 104. A control unit 106 is connected to the adjustable voltage regulator 104 and may transmit a signal relating to an adjusted charge voltage to the adjustable voltage regulator 104 as previously disclosed. The control unit 106 is further arranged to send a signal to the adjustable voltage regulator 104 instructing the adjustable voltage regulator 104 to provide a charge current to the capacitor 102. The control unit 106 is further arranged to measure a voltage across the capacitor 102.

The arrangement 400 may further comprise a load 402 such as a resistive load or an active current sink, being connected in parallel to the capacitor 102. The load 402 is arranged to be turned on and off. For example, the control unit 106 may be arranged to turn the load 402 on and off via a switch.

Further the arrangement 400 may comprise an arrangement 404 for measuring a charge current. The charge current measuring arrangement 404 may be arranged in the circuit between the adjustable voltage regulator 104 and the capacitor 102. Further, the arrangement 404 may be connected to the control unit 106. Similarly, the arrangement 400 may comprise an arrangement 406 for measuring a discharge current. The discharge current measuring arrangement 406 is preferably connected in series with the load 402. The arrangement 406 is further connected to the control unit 106. For example the current measuring arrangements 404 and 406 may comprise a high precision resistor and the current may be measured by measuring the voltage across the high precision resistor. The measuring of the voltage across the high precision resistor may be carried out by the control unit 106.

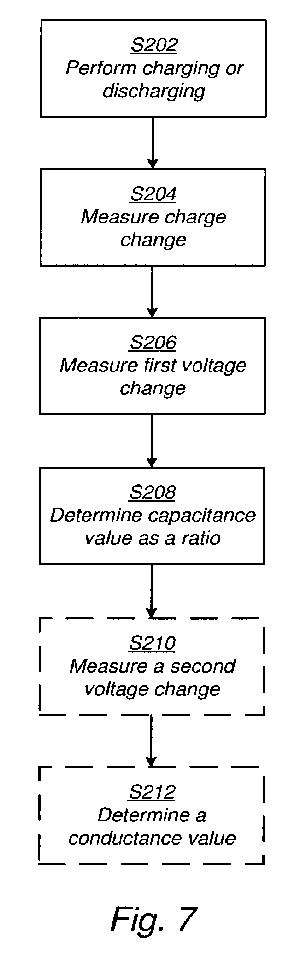

A method for determining the capacitance value C of the capacitor 102 will now be described with respect to Fig. 7 and Figs 4 and 5.

In a step S202 one of charging and discharging of the capacitor 102 is performed. The charging may be performed by providing a charging current to the capacitor 102. For example, the control unit 106 may instruct the adjustable voltage regulator 104 to provide a charging current to the capacitor 102. The discharging may be performed by turning on the load 402 being connected in parallel with the capacitor 102. The load 402 may for example be turned on by the control unit 106. Upon activation of the load 402, a discharging current is caused to flow from the capacitor 102 through the load 402.

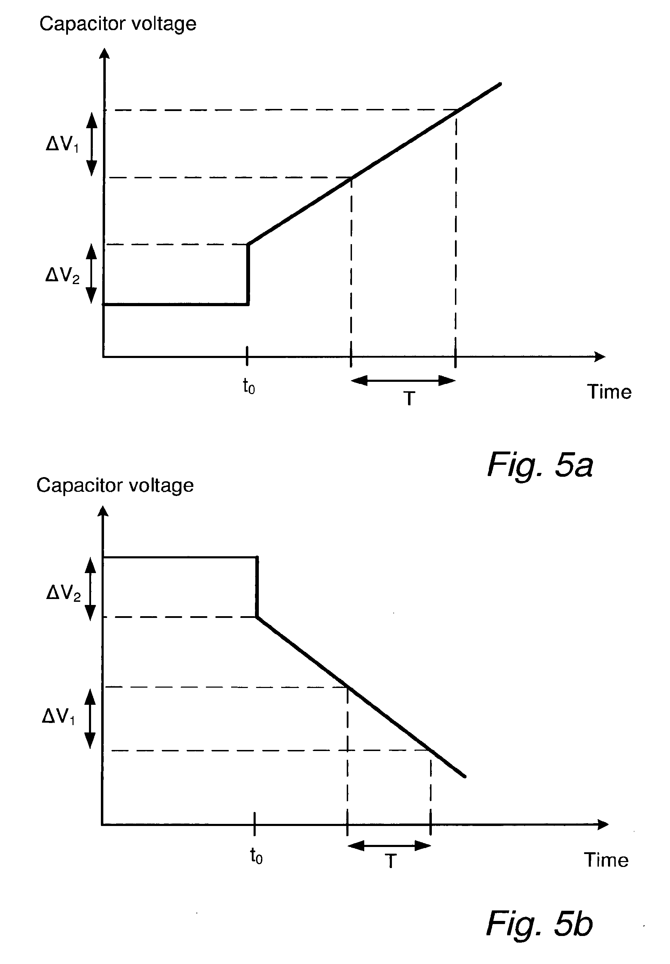

Figs 5a and 5b illustrate the voltage across the capacitor 102 during charging and discharging, respectively. The charging or discharging is initiated at a first time point $t_0$. At the first time point $t_0$, a charging current or a discharging current starts to flow to or from the capacitor 102. As a consequence, there will be a jump $\Delta V_2$ in the voltage across the capacitor 102 at the first time point $t_0$. This is due to an ohmic voltage drop caused by the ESR in the capacitor 102 when a charging or discharging current starts to flow to or from the capacitor 102.

As time goes by, the charge of the capacitor 102 increases or decreases depending on if the capacitor is charged or discharged. The charge change $\Delta Q_T$ of the capacitor during a time period T is given by the integral of the current to or from the capacitor 102 during the time period T. The time period T is assumed to occur after time $t_0$. Further, the voltage across the capacitor 102 increases or decreases after time $t_0$ depending on whether the capacitor 102 is being charged or discharged. In particular, there is a first voltage change $\Delta V_1$ across the voltage during the time period T.

In a step S204, the charge change $\Delta Q_T$ during the time period T is measured. The charge change $\Delta Q_T$ may for example be measured by the control unit 106 via the charge current measuring arrangement 404 or the discharge current measuring arrangement 406. More specifically, the charge change $\Delta Q_T$ may be measured by measuring and integrating the charge or discharge current during the time period T.

In a step S206, the first voltage change $\Delta V_1$ across the voltage during the time period T is measured. The first voltage change $\Delta V_1$ may for example be measured by the control unit. In principle, the time period T may be any time period of charging or discharging occurring after time $t_0$. Preferably, the time period T is as long as possible to minimize measurement uncertainty.

In a step S208, the capacitance value C of the capacitor 102 is determined as a ratio between the measured charge change $\Delta Q_T$ and the measured first voltage change $\Delta V_1$, viz.

$$C = \frac{\Delta Q_T}{\Delta V_1}.$$

In case the charging current or the discharging current has a known current value at the first time point, the method may further comprise a step S210 of measuring a second voltage change corresponding to the jump $\Delta V_2$ in the voltage across the capacitor 102 at the first time point to. The measuring may be performed by the control unit 106.

In a step S212, the conductance value G of the capacitor 102 may be determined as the ratio between the known current value and the measured second voltage change $\Delta V_2$. The conductance value G may be determined by the control unit 106.

In case the charging current or the discharging current corresponds to a constant current value, the voltage across the capacitor 102 increases or decreases linearly as a function of time during charging or discharging, as illustrated in Figs. 5a and 5b. If so, the rate of increase or decrease of the voltage across the capacitor 102 corresponds to the capacitance value C. In this case, the step 208 of determining the capacitance value C simplifies to determining a gradient of the voltage across the capacitor 102 during charging or discharging. The determination and the measuring of the voltage across the capacitor 102 may be performed by the control unit 106.

It will be appreciated that a person skilled in the art can modify the above-described embodiments in many ways and still use the advantages of the invention as shown in the embodiments above. For example, the embodiments for determining the capacitance disclosed with respect to Figs 3-4 may be combined such that the capacitance and/or conductance sometimes is determined by measuring on the capacitor and sometimes determined based on information received from a database. Thus, the invention should not be limited to the shown embodiments but should only be defined by the appended claims.

**Claims**

1.  A method for adjusting a charge voltage of a capacitor in a system having a charging part associated with the charge voltage and a discharging part having a required energy level $W_{need}$, the charge voltage being related to an energy level $W_{stored}$ stored in said capacitor, comprising
    receiving a capacitance value of the capacitor;
    receiving a value of the required energy level $W_{need}$; and
    adjusting the charge voltage of the capacitor based on said capacitance value and said value of the required energy level $W_{need}$ such that the energy level $W_{stored}$ stored in said capacitor is kept essentially constant.

2.  The method according to claim 1, wherein the capacitor is an Electrochemical Double Layer Capacitor, EDLC.

3.  The method according to claim 1, further comprising
    receiving a conductance value of the capacitor, said conductance value being related to an ohmic voltage drop,
    wherein said adjusting the charge voltage of the capacitor is further based on said conductance value to compensate for said ohmic voltage drop.

4.  The method according to claim 1, wherein the energy level $W_{stored}$ stored in the capacitor is larger than or equal to the required energy level $W_{need}$.

5.  The method according to claim 1, further comprising
    iterating the steps of receiving a capacitance value of the capacitor, and adjusting the charge voltage of the capacitor based on the capacitance value and the value of the required energy level $W_{need}$ until the energy level $W_{stored}$ stored in the capacitor is essentially equal to the required energy level $W_{need}$.

6.  The method according to claim 1, wherein the acts of receiving a capacitance value, receiving a value of the required energy level $W_{need}$, and adjusting the charge voltage are performed in cycles.

7.  The method according to claim 6, further comprising receiving a temperature value of an ambient temperature, and determining a period of the cycles based on the temperature value.

8.  The method according to claim 1, further comprising determining the capacitance value of the capacitor.

9.  The method according to claim 8, wherein the act of determining the capacitance value of the capacitor comprises performing one of charging or discharging of the capacitor by

    providing a charging current to the capacitor, or
    connecting a load in parallel with the capacitor, such that thereby a discharging current is caused to flow from the capacitor, wherein the charging or discharging is initiated at a first time point, measuring a charge change of the capacitor during a time period when the capacitor is charged or discharged, wherein the time period occurs after the first time point,

    measuring a first voltage change across the capacitor during the same time period, and
    determining the capacitance value as a ratio between the measured charge change and the measured first voltage change.

10. The method according to claim 9, wherein the charging current or the discharging current has a known current value at the first time point, the method further comprising:

measuring a second voltage change occurring at the first time point, the second voltage change being related to a voltage across a resistive component in the capacitor caused by the charging current or the discharging current, and

determining a conductance value of the capacitor as the ratio between the known current value and the measured second voltage change.

11. The method according to claim 9, wherein the charging current or the discharging current corresponds to a constant current value, and wherein the act of determining the capacitance value as a ratio comprises determining a gradient of a measured voltage across the capacitor during charging or discharging of the capacitor.

12. The method according to claim 8, wherein the act of receiving a capacitance value of the capacitor comprises
receiving information pertaining to variation of the capacitance value as a function of time and/or temperature from a curve or a table,
determining the capacitance value of the capacitor as the capacitance value of the curve or table that corresponds to a current time and/or temperature.

13. A control unit for adjusting a charge voltage of a capacitor in a system having a charging part associated with the charge voltage and a discharging part having a required energy level $W_{need}$, the charge voltage being related to an energy level $W_{stored}$ stored in said capacitor, comprising
a receiver arranged to receive a capacitance value of the capacitor; and a value of the required energy level $W_{need}$;
a processing unit arranged to adjust the charge voltage of the capacitor based on said capacitance value and said value of the energy level $W_{need}$ such that the energy level $W_{stored}$ stored in said capacitor is kept essentially constant; and
a transmitter arranged to transmit a signal relating to the adjusted charge voltage.

14. An arrangement for adjusting a charge voltage of a capacitor in a system having a charging part associated with the charge voltage and a
a control unit according to claim 13, and
an adjustable voltage regulator which is arranged to receive the signal relating to the adjusted charge voltage from the control unit, and to apply a voltage level across the capacitor corresponding to the adjusted charge voltage.

15. A computer program product stored on a non-volatile computer-readable medium comprising computer program code portions adapted to perform the method according to any of claims 1-12 when loaded and executed on a computer.

**Patentansprüche**

1. Verfahren zum Einstellen einer Ladespannung eines Kondensators in einem System mit einem Ladeteil assoziiert mit der Ladespannung und einem Entladeteil mit einem erforderlichen Energiepegel $W_{need}$, wobei die Ladespannung zu einem in dem Kondensator gespeicherten Energiepegel $W_{stored}$ in Beziehung steht, umfassend:

Empfangen eines Kapazitätswerts des Kondensators;
Empfangen eines Werts des erforderlichen Energiepegels $W_{need}$; und
Einstellen der Ladespannung des Kondensators auf der Basis des Kapazitätswerts und des Werts des erforderlichen Energiepegels $W_{need}$, so dass der in dem Kondensator gespeicherte Energiepegel $W_{stored}$ im Wesentlichen konstant gehalten wird.

2. Verfahren nach Anspruch 1, wobei der Kondensator ein elektrochemischer Doppelschicht-Kondensator, EDLC (Electrochemical Double Layer Capacitor) ist.

3. Verfahren nach Anspruch 1, weiterhin umfassend:

Empfangen eines Konduktanzwerts des Kondensators, wobei der Konduktanzwert zu einem ohmschen Spannungsabfall in Beziehung steht,
wobei das Einstellen der Ladespannung des Kondensators weiterhin auf dem Konduktanzwert basiert, um den ohmschen Spannungsabfall zu kompensieren.

4.  Verfahren nach Anspruch 1, wobei der in dem Kondensator gespeicherte Energiepegel $W_{stored}$ größer oder gleich dem erforderlichen Energiepegel $W_{need}$ ist.

5.  Verfahren nach Anspruch 1, weiterhin umfassend:

    Iterieren der Schritte des Empfangens eines Kapazitätswerts des Kondensators und des Einstellens der Ladespannung des Kondensators auf der Basis des Kapazitätswerts und des Werts des erforderlichen Energiepegels $W_{need}$, bis der im Kondensator gespeicherte Energiepegel $W_{stored}$ im Wesentlichen gleich dem erforderlichen Energiepegel $W_{need}$ ist.

6.  Verfahren nach Anspruch 1, wobei die Handlungen des Empfangens eines Kapazitätswerts, des Empfangens eines Werts des erforderlichen Energiepegels $W_{need}$ und des Einstellens der Ladespannung in Zyklen durchgeführt werden.

7.  Verfahren nach Anspruch 6, das weiterhin Folgendes umfasst:

    Empfangen eines Temperaturwerts einer Umgebungstemperatur und
    Bestimmen einer Periode der Zyklen auf der Basis des Temperaturwerts.

8.  Verfahren nach Anspruch 1, das weiterhin Folgendes umfasst:

    Bestimmen des Kapazitätswerts des Kondensators.

9.  Verfahren nach Anspruch 8, wobei die Handlung des Bestimmens des Kapazitätswerts des Kondensators Folgendes umfasst:

    Durchführen eines Ladens oder Entladens des Kondensators durch

        Liefern eines Ladestroms an den Kondensator oder
        Schalten einer Last parallel zu dem Kondensator, so dass

    dadurch das Fließen eines Entladestroms vom Kondensator bewirkt wird,
    wobei das Laden oder Entladen an einem ersten Zeitpunkt initiiert wird,
    Messen einer Ladungsänderung des Kondensators während einer Zeitperiode, wenn der Kondensator geladen oder entladen wird, wobei die Zeitperiode nach dem ersten Zeitpunkt auftritt,
    Messen einer ersten Spannungsänderung am Kondensator während der gleichen Zeitperiode und
    Bestimmen des Kapazitätswerts als ein Verhältnis zwischen der gemessenen Ladungsänderung und der gemessenen ersten Spannungsänderung.

10. Verfahren nach Anspruch 9, wobei der Ladestrom oder der Entladestrom zum ersten Zeitpunkt einen bekannten Stromwert besitzt, wobei das Verfahren weiterhin Folgendes umfasst:

    Messen einer zweiten Spannungsänderung, die beim ersten Zeitpunkt auftritt, wobei die zweite Spannungsänderung zu einer Spannung an einer resistiven Komponente im Kondensator in Beziehung steht, die durch den Ladestrom oder den Entladestrom verursacht wird, und
    Bestimmen eines Konduktanzwerts des Kondensators als das Verhältnis zwischen dem bekannten Stromwert und der gemessenen zweiten Spannungsänderung.

11. Verfahren nach Anspruch 9, wobei der Ladestrom oder der Entladestrom einem Konstanzstromwert entspricht und wobei die Handlung des Bestimmens des Kapazitätswerts als ein Verhältnis das Bestimmen eines Gradienten einer gemessenen Spannung am Kondensator während des Ladens oder Entladens des Kondensators umfasst.

12. Verfahren nach Anspruch 8, wobei die Handlung des Empfangens eines Kapazitätswerts des Kondensators Folgendes umfasst:

    Empfangen von Informationen bezüglich einer Variation des Kapazitätswerts als eine Funktion von Zeit und/oder Temperatur aus einer Kurve oder einer Tabelle,
    Bestimmen des Kapazitätswerts des Kondensators als der Kapazitätswert der Kurve oder Tabelle, der einer aktuellen Zeit und/oder Temperatur entspricht.

13. Steuereinheit zum Einstellen einer Ladespannung eines Kondensators in einem System mit einem Ladeteil assoziiert mit der Ladespannung und einem Entladeteil mit einem erforderlichen Energiepegel $W_{need}$, wobei die Ladespannung zu einem in dem Kondensator gespeicherten Energiepegel $W_{stored}$ in Beziehung steht, umfassend:

einen Empfänger, der ausgelegt ist zum Empfangen eines Kapazitätswerts des Kondensators und eines Werts des erforderlichen Energiepegels $W_{need}$;
eine Verarbeitungseinheit, die ausgelegt ist zum Einstellen der Ladespannung des Kondensators auf der Basis des Kapazitätswerts und des Werts des Energiepegels $W_{need}$, so dass der in dem Kondensator gespeicherte Energiepegel $W_{stored}$ im Wesentlichen konstant gehalten wird; und
einen Sender, der ausgelegt ist zum Übertragen eines die eingestellte Ladespannung betreffenden Signals.

14. Eine Anordnung zum Einstellen einer Ladespannung eines Kondensators in einem System mit einem Ladeteil assoziiert mit der Ladespannung und einem
eine Steuereinheit nach Anspruch 13 und
ein justierbarer Spannungsregler, der ausgelegt ist zum Empfangen des die eingestellte Ladespannung betreffenden Signals von der Steuereinheit und zum Anlegen eines Spannungspegels an den Kondensator entsprechend der eingestellten Ladespannung.

15. Computerprogrammprodukt, das in einem nichtflüchtigen computerlesbaren Medium gespeichert ist, umfassend Computerprogrammcodeabschnitte, ausgelegt zum Durchführen des Verfahrens nach einem der Ansprüche 1-12, wenn auf einem Computer geladen und dort ausgeführt.

**Revendications**

1. Procédé pour ajuster une tension de charge d'un condensateur dans un système comprenant une partie de chargement associée à la tension de charge et une partie de déchargement ayant un niveau d'énergie requis $W_{need}$, la tension de charge étant liée à un niveau d'énergie $W_{stored}$ stocké dans ledit condensateur, lequel consiste à :

- recevoir une valeur de capacitance du condensateur ;
- recevoir une valeur du niveau d'énergie requis $W_{need}$ ; et
- ajuster la tension de charge du condensateur en fonction de ladite valeur de capacitance et de ladite valeur du niveau d'énergie requis $W_{need}$ de sorte que le niveau d'énergie $W_{stored}$ stocké dans ledit condensateur demeure essentiellement constant.

2. Procédé selon la revendication 1, dans lequel le condensateur est un condensateur double couche électrochimique (EDLC).

3. Procédé selon la revendication 1, consistant en outre à :

- recevoir une valeur de conductance du condensateur, la valeur de conductance se rapportant à une chute de tension ohmique ;

dans lequel l'ajustement de la tension de charge du condensateur est en outre fonction de la valeur de conductance afin de compenser ladite chute de tension ohmique.

4. Procédé selon la revendication 1, dans lequel le niveau d'énergie $W_{stored}$ stocké dans le condensateur est supérieur ou égal au niveau d'énergie requis $W_{need}$.

5. Procédé selon la revendication 1, consistant en outre à

- répéter les étapes consistant à recevoir une valeur de capacitance du condensateur, et ajuster la tension de charge du condensateur en fonction de la valeur de capacitance et de la valeur du niveau d'énergie requis $W_{need}$ jusqu'à ce que le niveau d'énergie $W_{stored}$ stocké dans le condensateur soit essentiellement égal au niveau d'énergie requis $W_{need}$.

6. Procédé selon la revendication 1, dans lequel les opérations de réception d'une valeur de capacitance, de réception d'une valeur du niveau d'énergie requis $W_{need}$ et d'ajustement de la tension de charge sont réalisées selon des cycles.

7. Procédé selon la revendication 6, consistant en outre à :

   - recevoir une valeur de température d'une température ambiante ; et
   - déterminer une période des cycles en fonction de la valeur de température.

8. Procédé selon la revendication 1, consistant en outre à déterminer la valeur de capacitance du condensateur.

9. Procédé selon la revendication 8, dans lequel l'opération consistant à déterminer la valeur de capacitance du condensateur consiste à :

   - effectuer l'un d'un chargement ou d'un déchargement du condensateur en :

      - fournissant un courant de chargement au condensateur, ou en
      - connectant une charge en parallèle au condensateur de sorte qu'un courant de déchargement circule ainsi depuis le condensateur,
      le chargement ou le déchargement étant initiés à un premier instant dans le temps ;

   - mesurer un changement de charge du condensateur pendant une période où le condensateur est chargé ou déchargé, la période venant après le premier instant dans le temps ;
   - mesurer un premier changement de tension dans le condensateur pendant cette même période ; et
   - déterminer la valeur de capacitance comme étant un rapport entre le changement de charge mesuré et le premier changement de tension mesuré.

10. Procédé selon la revendication 9, dans lequel le courant de chargement ou le courant de déchargement possèdent une valeur de courant connue au premier instant dans le temps, lequel procédé consiste en outre à :

    - mesurer un second changement de tension se produisant au premier instant dans le temps, le second changement de tension étant lié à une tension dans un composant résistif dans le condensateur due au courant de chargement ou au courant de déchargement ; et
    - déterminer une valeur de conductance du condensateur comme étant le rapport entre la valeur de courant connue et le second changement de tension mesuré.

11. Procédé selon la revendication 9, dans lequel le courant de chargement ou le courant de déchargement correspondent à une valeur de courant constante, et dans lequel l'opération consistant à déterminer la valeur de capacitance en qualité de rapport consiste à déterminer un gradient d'une tension mesurée dans le condensateur pendant le chargement ou le déchargement du condensateur.

12. Procédé selon la revendication 8, dans lequel l'opération consistant à recevoir une valeur de capacitance du condensateur consiste à :

    - recevoir des informations concernant la variation de la valeur de capacitance en fonction du temps et/ou de la température à partir d'une courbe ou d'une table ; et
    - Déterminer la valeur de capacitance du condensateur comme étant la valeur de capacitance de la courbe ou de la table qui correspond à un temps et/ou une température actuels.

13. Unité de commande pour ajuster une tension de charge d'un condensateur dans un système comprenant une partie de chargement associée à la tension de charge et une partie de déchargement ayant un niveau d'énergie requis $W_{need}$, la tension de charge étant liée à un niveau d'énergie $W_{stored}$ stocké dans ledit condensateur, laquelle comprend :

    - un récepteur conçu pour recevoir une valeur de capacitance du condensateur et une valeur du niveau d'énergie requis $W_{need}$ ;
    - une unité de traitement conçue pour ajuster la tension de charge du condensateur en fonction de ladite valeur de capacitance et de ladite valeur du niveau d'énergie requis $W_{need}$ de sorte que le niveau d'énergie $W_{stored}$ stocké dans ledit condensateur demeure essentiellement constant ; et

- un émetteur conçu pour transmettre un signal concernant la tension de charge ajustée.

14. Agencement pour ajuster une tension de charge d'un condensateur dans un système comprenant une partie de chargement associée à la tension de charge et un

   - une unité de commande selon la revendication 13 ; et
   - un régulateur de tension ajustable conçu pour recevoir le signal concernant la tension de charge ajustée depuis l'unité de commande, et appliquer un niveau de tension dans le condensateur correspondant à la tension de charge ajustée.

15. Produit de type programme informatique stocké sur un support lisible par ordinateur non volatil, comprenant des parties de codes de programme informatique conçues pour réaliser le procédé selon l'une quelconque des revendications 1 à 12 lorsque chargé et exécuté sur un ordinateur.

*Fig. 1*

EP 2 805 401 B1

*106*

*Fig. 2*

300

302

106

304

306

104

102

*Fig. 3*

Fig. 4

*Fig. 5a*

*Fig. 5b*

*S102*
*Receive capacitance value*

*S104*
*Receive conductance value*

*S106*
*Receive required energy level*

*S108*
*Adjust charge voltage*

*Fig. 6*

```
┌─────────────────────────┐
│         S202            │
│   Perform charging or   │
│      discharging        │
└─────────────────────────┘
             │
             ▼
┌─────────────────────────┐
│         S204            │
│     Measure charge      │
│        change           │
└─────────────────────────┘
             │
             ▼
┌─────────────────────────┐
│         S206            │
│  Measure first voltage  │
│        change           │
└─────────────────────────┘
             │
             ▼
┌─────────────────────────┐
│         S208            │
│ Determine capacitance   │
│    value as a ratio     │
└─────────────────────────┘
             │
             ▼
┌ ─ ─ ─ ─ ─ ─ ─ ─ ─ ─ ─ ─ ┐
│         S210            │
│    Measure a second     │
│     voltage change      │
└ ─ ─ ─ ─ ─ ─ ─ ─ ─ ─ ─ ─ ┘
             │
             ▼
┌ ─ ─ ─ ─ ─ ─ ─ ─ ─ ─ ─ ─ ┐
│         S212            │
│     Determine a         │
│   conductance value     │
└ ─ ─ ─ ─ ─ ─ ─ ─ ─ ─ ─ ─ ┘
```

*Fig. 7*

**EP 2 805 401 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005117792 A
- JP 2005117792 B